# EUROPÄISCHE PATENTSCHRIFT

(11) **EP 0 965 102 B1**
(45) Veröffentlichungstag und Bekanntmachung des Hinweises auf die Patenterteilung: **30.01.2002**
(21) Anmeldenummer: 98914865.5
(22) Anmeldetag: 04.03.1998
(51) Int. Cl.: G06K 19/06, G11B 20/10, G11B 19/12

(54) **VORRICHTUNG ZUR AUSGABE VON AUF EINEM DATENTRÄGER DIGITAL GESPEICHERTEN DATEN**
OUTPUT DEVICE FOR DIGITALLY STORED DATA ON A DATA CARRIER
DISPOSITIF DE SORTIE DE DONNEES MEMORISEES DE MANIERE NUMERIQUE SUR UN SUPPORT DE DONNEES

(30) Priorität: 07.03.1997 DE 19709305
(43) Veröffentlichungstag der Anmeldung: 22.12.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: LAMBRECHT, Armin, D-79232 March (DE); RIEDEL, Wolfgang, J., D-79379 Mülheim (DE); BRUNNER, Raimund, D-79211 Denzlingen (DE)
(74) Vertreter: Zellentin, Wiger, Dipl.-Ing.
(86) Internationale Anmeldenummer: EP9801220
(87) Internationale Veröffentlichungsnummer: WO9840845

(56) Entgegenhaltungen:
- EP-A- 0 265 849
- EP-A- 0 278 760
- EP-A- 0 521 487
- EP-A- 0 602 581
- EP-A- 0 713 194
- EP-A- 0 773 511
- DE-A- 19 625 396

## Beschreibung

Die Erfindung betrifft eine Vorrichtung zur Ausgabe von auf einem Datenträger digital gespeicherten Daten, insbesondere von Audiodaten, mit einer Leseeinheit zum Auslesen der Daten von dem Datenträger als Analogsignale, mit einer Datenwandlereinheit zum Aufarbeiten der Daten und mit einer Ausgabeeinheit zur Ausgabe der aufgearbeiteten Daten.

Eine derartige Vorrichtung ist aus der DE-U 295 00 376 bekannt. Bei dieser Vorrichtung ist zur Ausgabe von auf einem Datenträger digital gespeicherten Daten eine optische Leseeinheit zum Einlesen der Daten vorgesehen, die über einen optischen Lesekopf verfügt, der als sogenannter Handscanner über den Datenträger zu führen ist. Nach Aufarbeiten der eingelesenen Daten in einem Datenwandler ist beispielsweise in einem Lautsprecher als Ausgabeeinheit eine Tonfolge als Audiodaten wiedergebbar.

Obwohl die gattungsgemäße Vorrichtung grundsätzlich funktionsfähig ist, erscheint sie in vielerlei Hinsicht für eine qualitativ hochwertige Wiedergabe digital gespeicherter Daten verbesserungsbedürftig.

Eine weitere derartige Vorrichtung ist aus der EP 0 773 511 bekannt. Bei dieser Vorrichtung ist zur Ausgabe von auf einem Datenträger digital gespeicherten Daten eine optische Leseeinheit zum Einlesen der Daten vorgesehen, die über einen Bildsensor verfügt. Eine erste Aufarbeitung erfolgt auf der untersten Ebene 1 für ein Bild des Bildsensors, das erste Ergebnis wird in der darüberliegenden Ebene 2 auf enthaltene Datenblöcke hin ausgewertet, das zweite Ergebnis in der darüberliegenden Ebene 3 zu Makroblöcken zusammengefaßt, die dann in Ebene 4 zu Teildateien verbunden werden, welche in Ebene 5 zu Dateien zusammengefaßt und der übergeordneten Anwendung zur Verfügung gestellt werden.

Auch diese gattungsgemäße Vorrichtung ist grundsätzlich funktionsfähig. Bei geeigneter Gestaltung des in den Ebenen angewendeten Verfahrens ist auch eine qualitativ hochwertige Wiedergabe erreichbar. Die Vorrichtung benötigt aber von der Aufnahme der Bilder des Bildsensors bis zur Ausgabe der Daten, beispielsweise als Tonfolge, aufgrund der Verarbeitung der in Flächeneinheiten gefaßten Daten in Schritten eine relativ lange Zeit, die von einem Benutzer der Vorrichtung als störend empfunden wird. Die Verwendung von Bildsensoren behindert darüber hinaus eine preiswerte und auch von den Abmessungen her kleine Realisierung einer besonders hohen Datendichte der auf einem Datenträger digital gespeicherten Daten.

Der Erfindung liegt daher die Aufgabe zugrunde, eine Vorrichtung der eingangs genannten Art insbesondere so weiterzubilden, daß insbesondere bei einer hohen Dichte von wiederzugebenden Daten eine vergleichsweise schnelle sowie weitgehend fehlerfreie Datenaufarbeitung geschaffen ist.

Die Lösung dieser Aufgabe gelingt mit einer Vorrichtung gemäß dem Hauptanspruch, vorteilhafte Ausgestaltungen finden sich in den Unteransprüchen.

Dadurch, daß eine Startblockerfassungseinheit und eine Steuerdatenspeichereinheit vorgesehen sind, mittels denen in einem Startblock des Datenträgers gespeicherte Steuerdaten lesbar und abspeicherbar sind, läßt sich eine nachfolgende Datenaufarbeitung durch in den Steuerdaten enthaltene Vorgabeparameter gezielt steuern. Hierzu sind erfindungsgemäß Datenrekonstruktionselemente vorgesehen, die von zugeordneten Steuerdaten gespeist die Aufarbeitung der wiederzugebenden Daten derart beeinflussen, daß auch große Datenmengen schnell und fehlerfrei aufarbeitbar sind.

In Ausführungsbeispielen weist die Steuerdatenspeichereinheit sowie die Datenwandlereinheit als Speicher- und Ausgabeglieder beziehungsweise als zugeordnete Datenrekonstruktionselemente jeweils alternativ und/oder kumulativ einen Binärschwellwertgeber mit zugeordnetem Binärrekonstruktionsglied zum Umwandeln von Analogsignalen in Binärdaten gemäß einem vorgegebenen Schwellwert, einen Drehkorrekturwertgeber mit einem zugeordneten Drehkorrekturglied zum Kompensieren einer gegenüber einer Sollausrichtung abweichenden Verdrehung des Datenträgers, einen Rastermaßgeber mit zugeordnetem Texturrekonstruktionsglied zum Reduzieren auf einen dem tatsächlichen Rastermaß des Datenträgers entsprechenden Datensatz, so daß bei einem gegenüber dem Auflösungsvermögen der Leseeinheit gröberen Rastermaß des Datenträgers Einlesevorgänge beschleunigt sind, einen Datenformatgeber mit zugeordnetem Datenaufarbeitungsglied zur Dekomprimierung beziehungsweise Dekodierung sowie Fehlerkorrektur in bezug auf ein bestimmtes Datenformat sowie einen Aussteuerwertegeber mit zugeordnetem Digital-Analog-Wandler zur ausgaberichtigen Umwandlung in Wiedergabesignale auf.

Bei der Erfindung werden die Daten zeilenweise erfaßt. Sobald die Daten des Startblocks vollständig vorliegen, was bei einer redundanten Verteilung dieser Daten innerhalb der 1. Zeile bereits vor vollständiger Auswertung dieser 1. Zeile möglich ist, kann die Umschaltung in die Ausgabeverarbeitung bei üblichen besonders preisgünstigen Zeilensensoren mit einer Zeilenfrequenz von typisch 2,5 kHz bereits in wenigen Millisekunden erfolgen, selbst bei üblicherweise nötiger Drehkorrektur, da bereits nach wenigen Zeilen ausgebbare Ergebnisse vorliegen.

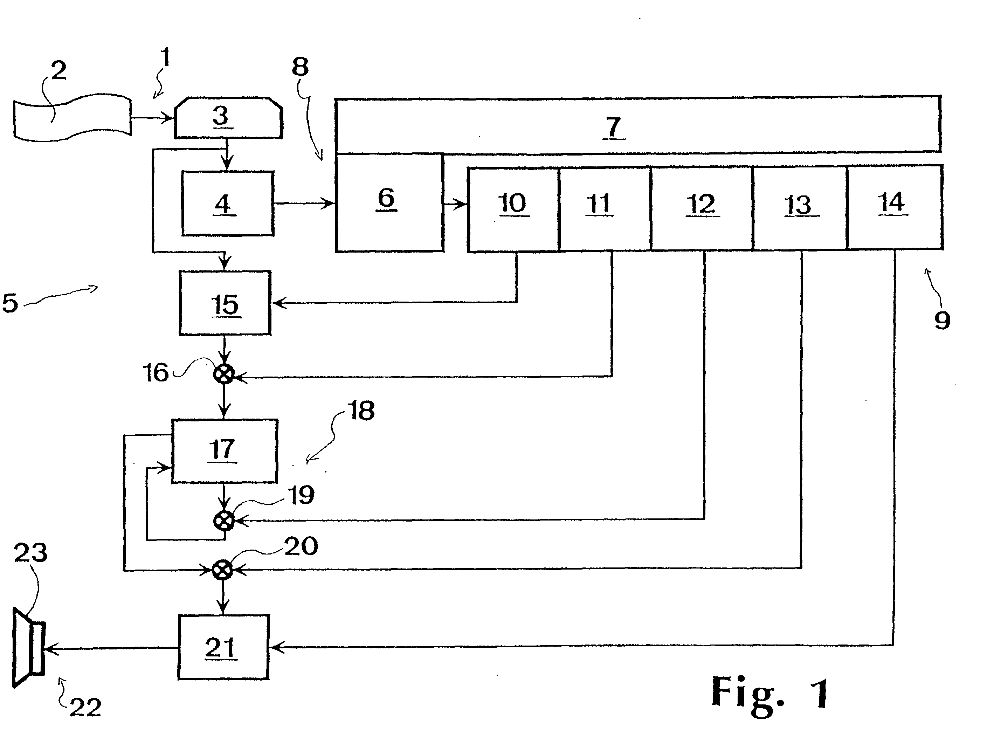

Diese verzögerungsarme, also schnelle Art der Datenaufarbeitung ist mit der direkten Verarbeitung des Signals, wie sie auch in Figur 1 dargestellt ist, möglich.

Bevorzugt ist die Leseeinheit zum optischen Auslesen der Daten eingerichtet. In Ausgestaltungen sind hierzu relativ zu einem ruhenden Datenträger verschwenk- oder verschiebbare Bauelemente vorgesehen, mit denen die Daten vorzugsweise zeilenweise auslesbar sind.

Weitere zweckmäßige Ausgestaltungen und Vorteile der Erfindung sind Gegenstand der Unteransprüche sowie der nachfolgenden Beschreibung von Ausführungsbeispielen unter Bezug auf die Figuren der Zeichnung. Es zeigen:
- Figur 1: in einem Blockschaltbild ein erstes Ausführungsbeispiel einer Vorrichtung zur Ausgabe von auf einem Datenträger digital gespeicherten Daten mit zwei Analog/Digital-Wandlern und einer aus einem Mehrfachspeicher gebildeten Speichereinheit,
- Figur 2: in einem Blockschaltbild ein zweites Ausführungsbeispiel einer Vorrichtung zur Ausgabe von auf einem Datenträger digital gespeicherten Daten, die als Abwandlung gegenüber der Vorrichtung gemäß Fig. 1 über eine Speichereinheit mit zwei Speichern verfügt,
- Figur 3: in einem Blockschaltbild ein drittes Ausführungsbeispiel einer Vorrichtung zur Ausgabe von auf einem Datenträger digital gespeicherten Daten, die in Abwandlung zu der Vorrichtung gemäß Fig. 1 über einen einzigen Analog/Digital-Wandler mit nachgeschaltetem Datenrekonstruktionselement verfügt,
- Fig. 4: ein Ausführungsbeispiel einer optischen Leseeinheit mit einem Schwenkspiegel für eine Vorrichtung zur Ausgabe von auf einem Datenträger digital gespeicherten Daten,
- Fig. 5: die Leseeinheit gemäß Fig. 4 in einer Seitenansicht,
- Fig. 6 und Fig. 7: ein weiteres Ausführungsbeispiel einer optischen Leseeinheit mit einer Linearverschiebeoptik in zwei Randstellungen.

Fig. 1 zeigt in einem Blockschaltbild ein erstes Ausführungsbeispiel einer Vorrichtung zur Ausgabe von auf einem Datenträger digital gespeicherten Daten. Die Vorrichtung gemäß Fig. 1 weist eine Leseeinheit 1 auf, die über einen Abtastglied 2 und einen mit dem Abtastglied 2 in Verbindung stehendes Detektionsglied 3 verfügt. Bevorzugt ist das Abtastglied 2 eine optische Einrichtung, mit der ein ruhender Datenträger mit in einem Hell-Dunkel-Raster digital gespeicherten Daten mit Strahlung beaufschlagbar ist und rückgeworfene Strahlungsanteile dem einen optischen Detektor aufweisenden Detektionsglied 3 zuführbar sind.

Bevorzugt ist als Datenträger von digitalen Daten eine drucktechnisch oder auf photographischem Weg mit einem Schwarz-Weiß- oder Farbpunktemuster versehene Unterlage vorgesehen, auf der als Audiodaten beispielsweise eine Tonfolge abgespeichert ist. Die Daten setzen sich aus einem Startblock und einem aus einzelnen Datenblöcken aufgebauten Wiedergabeblock zusammen, der optional durch einen Endblock abgeschlossen ist. Weiterhin ist ein Orientierungsrahmen vorgesehen, der beispielsweise als Zahnrahmen ausgeführt ist. Die Wiedergabedaten können dabei durch ein im Bereich der Audiotechnik an sich bekannten Verfahren komprimiert und/oder kodiert sein.

An das Detektionsglied 3 der Leseeinheit 1 ist ein Startblock-Analog/Digital-Wandler (Startblock-ADW) 4 einer Datenwandlereinheit 5 angeschlossen, der beispielsweise als 8-Bit-Analog/-Digital-Wandler ausgestaltet ist. Mit dem Startblock-ADW 4 sind 5 von dem Detektionsglied 3 ausgegebene Analogsignale wenigstens eines auf dem Datenträger als Teil der digital gespeicherten Daten enthaltenen und bei einem insbesondere schnellen Abtastvorgang des Datenträgers zur Bestimmung einer Verdrehung gegenüber einer Sollrichtung um die Verdrehung repräsentierende Steuerdaten ergänzten Startblockes digitalisierbar und einem Startblockauswerteglied 6 einer Steuereinheit 7 einspeisbar, das eine Startblockerfassungseinheit 8 bildet. Mit dem Startblockauswerteglied 6 sind in dem Startblock des Datenträgers enthaltene und ergänzte Steuerdaten lesbar und einer Steuerdatenspeichereinheit 9 einspeisbar, die als Speicher- und Ausgabeglieder für Steuerdatenkomponenten einen Graustufen-Schwellwertgeber 10, einen Drehkorrekturwertgeber 11, einen Rastermaßgeber 12, einen Datenformatgeber 13 und einen Aussteuerwertegeber 14 aufweist.

In den Graustufen-Schwellwertgeber 10 als Schwellwertgeber ist eine Graustufe als Schwellwert für eine Binärentscheidung einspeisbar, wobei bei einem Analogsignalpegel unterhalb des Schwellwertes das Analogsignal in eine Wertigkeit eines Binärsignales, beispielsweise des Nullsignales, und bei einem Analogsignalpegel oberhalb des Schwellwertes das Analogsignal in die andere Wertigkeit des Binärsignales, beispielsweise des Eins-Signales, umwandelbar ist. Mit dem Drehkorrekturwertgeber 11 ist ein eine vorhandene Verdrehung des Datenträgers in bezug auf eine Sollrichtung repräsentierendes, durch die Ausrichtung eines Orientierungsrahmens des Datenträgers bestimmter Drehkorrekturwert speicherbar, der beispielsweise aus bei einem schnellen Abtastvorgang des Datenträgers aus der Lage einer Umrandung oder bei einem Abtasten des Startblockes aus dessen Orientierung gewonnenen Ausrichtdaten gebildet ist. Die Drehkorrektur wird vorzugsweise durch eine zweidimensionale Scherung ausgeführt. In dem Rastermaßgeber 12 ist ein Rastermaßwert speicherbar, der ein der räumlichen Speicherdichte entsprechendes Rastermaß des Datenträgers repräsentiert. In dem Datenformatgeber 13 ist ein 5 Datenformat und ein damit verbundenes Fehierkorrekturverfahren der auf dem Datenträger digital abgespeicherten Daten repräsentierender Datenformatwert abspeicherbar und in dem Aussteuerwertegeber 14 sind insbesondere bei akustisch wiederzugebenden Audiodaten als Daten aufweisenden Datenträgern für eine akustische Wiedergabe zweckmäßige Aussteuerwerte abspeicherbar.

Die Datenwandlereinheit 5 der Vorrichtung gemäß Fig. 1 verfügt als Datenrekonstruktionselement weiterhin über einen Wiedergabedaten-Analog/Digital-Wandler (Wiedergabedaten-ADW) 15, der beispielsweise als schneller 1-Bit-Analog/Digital-Wandler ausgeführt ist. Der Wiedergabe-ADW 15 ist zum einen direkt an das Detektionsglied 3 und zum anderen an den Graustufen-Schwellwertgeber 10 angeschlossen, wobei wenigstens Analogsignale von auf dem Datenträger digital abgespeicherten Wiedergabedaten der Daten in Abhängigkeit des in dem Binärschwellwertgeber 10 abgespeicherten Schwellwertes in Binärdaten umwandelbar sind.

Dem Wiedergabedaten-ADW 15 ist ein Drehkorrekturglied 16 als weiteres Datenrekonstruktionselement der Datenwandlereinheit 5 nachgeschaltet, das weiterhin an den Drehkorrekturwertgeber 11 angeschlossen ist. Mit dem Drehkorrekturglied 16 sind die Binärdaten der auszugebenden Teile der Daten bezüglich einer von einer Sollausrichtung des Datenträgers abweichenden, durch den Drehkorrekturwert repräsentierten Verdrehung auf die Sollausrichtung korrigierbar.

Die drehkorrigierten Binärdaten sind einem Mehrfachspeicher 17 eines Speichergliedes 18 der Datenwandlereinheit 5 zuführbar. Mit dem gemeinsam mehrfach nutzbaren, überschreibbaren flüchtigen Mehrfachspeicher 17 sind zunächst wenigstens ein Teil der drehkorrigierten Binärdaten zwischenspeicherbar und sequentiell einem nachgeschalteten Texturrekonstruktionsglied 19 als weiterem Datenrekonstruktionselement einspeisbar. Das Texturrekonstruktionsglied 19 ist weiterhin mit dem Rastermaßgeber 12 verbunden, in dem der das Rastermaß des Datenträgers repräsentierende Rastermaßwert abgespeichert ist. Die dem Texturrekonstruktionsglied 19 eingespeisten, ein flächiges Binärbild wenigstens der auszugebenden Wiedergabedaten bildenden Binärdaten sind auf dem Rastermaß des Datenträgers entsprechende Binärdaten unter Wegfall für die Wiedergabedaten redundanter Bildinformation rekonstruierbar und unter Überschreiben von bereits verarbeiteten Rohbinärdaten in den Mehrfachspeicher 17 rückspeicherbar. Die rekonstruierten Binärdaten in dem Mehrfach-Speicher 17 sind für eine weitere Nutzung, beispielsweise über eine Infrarot-Datenübertragung für eine Weiterverwendung, an eine externe Einheit übertragbar.

Die bezüglich des Rastermaßes komprimierten Binärdaten sind auf ein Datenaufarbeitungsglied 20 als weiterem Datenrekonstruktionselement der Datenwandlereinheit 5 ausgebbar, das weiterhin an den Datenformatgeber 13 angeschlossen ist. Mittels des Datenaufarbeitungsgliedes 20 sind mit Vorgabe des Datenformates die auszugebenden Wiedergabedaten mit Fehlerkorrektur beispielsweise durch Konsistenzprüfung gemäß dem angewendeten Speicherverfahren zur Wiedergabe dekomprimierbar beziehungsweise dekodierbar.

Dem Datenaufarbeitungsglied 20 ist als weiteres Datenrekonstruktionselement ein Ausgabe-Digital/Analog-Wandler (Ausgabe-DAW) 21 nachgeschaltet, der weiterhin an den Aussteuerwertegeber 14 angeschlossen ist. Mit dem Ausgabe-DAW 21 sind die fehlerkorrigierten dekomprimierten beziehungsweise dekodierten Binärdaten in Verbindung mit den Aussteuerwerten aus dem Aussteuerwertegeber 14 in auszugebende Wiedergabeanalog-Signale umwandelbar, die einer Ausgabeeinheit 22 einspeisbar sind. Bei der anhand Fig. 1 erläuterten Vorrichtung verfügt die Ausgabeeinheit 22 über ein Schallwandlerglied 23 beispielsweise in Gestalt eines Lautsprechers zur Wiedergabe von auf dem Datenträger abgespeicherten Audiodaten wie einer Tonfolge.

Das Ausführungsbeispiel gemäß Fig. 1 zeichnet sich dadurch aus, daß durch die zweifache Nutzung des Mehrfachspeichers 17 sowie die schnelle Verarbeitung der die auszugebenden Wiedergabedaten aufweisenden Teile der Daten durch den schnellen Wiedergabedaten-ADW 15 eine kostengünstige Lösung angegeben ist, die die Daten mit verhältnismäßig geringer Verzögerungszeit ausgibt.

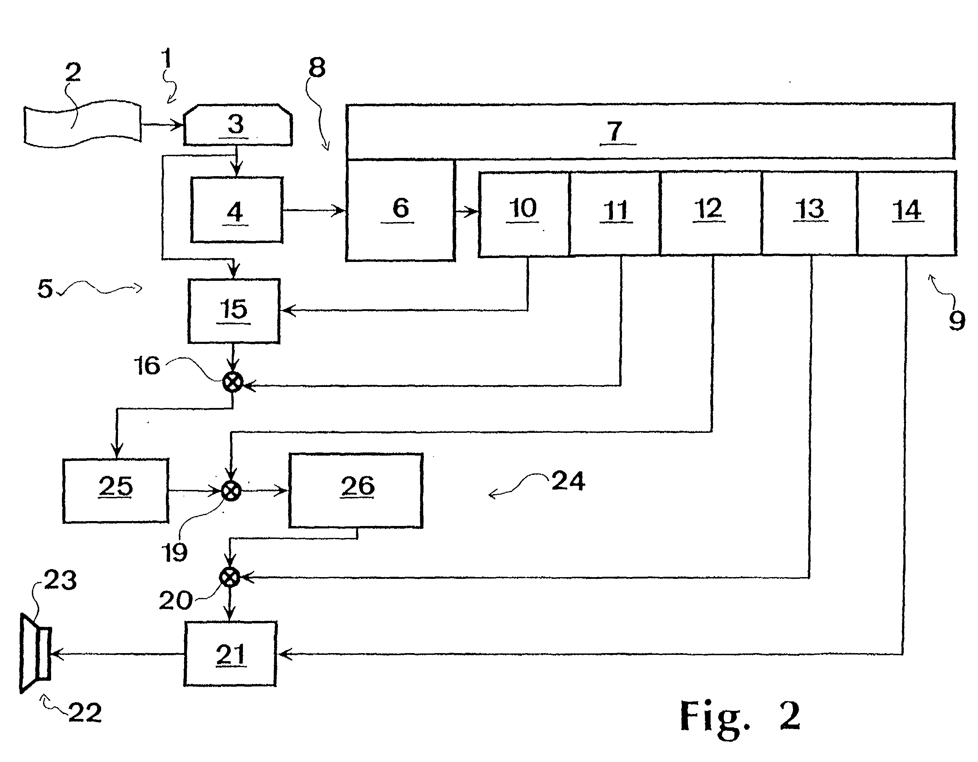

Fig. 2 zeigt in einem Blockschaltbild ein zweites Ausführungsbeispiel einer Vorrichtung zur Ausgabe von auf einem Datenträger digital gespeicherten Daten als Abwandlung des anhand Fig. 1 erläuterten Ausführungsbeispieles, wobei sich entsprechende Bauelemente in Fig. 1 und Fig. 2 mit gleichen Bezugszeichen versehen und nachfolgend nicht näher erläutert sind. Die Datenwandlereinheit 5 des Ausführungsbeispieles gemäß Fig. 2 weist ein Speicherglied 24 auf, das über einen dem Drehkorrekturglied 16 nachgeordneten Binärvollbildspeicher 25 und einem dem Texturrekonstruktionsglied 19 nachgeschalteten Binärwiedergabedatenspeicher 26 verfügt. In den Binärvollbildspeicher 25 sind die drehkorrigierten, von dem Wiedergabedaten-ADW 15 digitalisierten Binärwiedergabedaten in der Auflösung des Abtastgliedes 2 als Binärvollbild abspeicherbar. Nach Reduktion der Binärvollbilddaten des Binärvollbildspeichers 25 auf das Rastermaß des Datenträgers mittels des Rastermaßgebers 12 und des Texturrekonstruktionsgliedes 19 sind in dem Binärwiedergabedatenspeicher 26 die Binärwiedergabedaten mit ihrem vollen wiederzugebenden Informationsgehalt abspeicherbar.

Besonders zweckmäßig ist es, den Binärwiedergabedatenspeicher 26 nichtflüchtig auszugestalten, so daß die wiederzugebenden Daten beispielsweise mehrfach ausgebbar sind. in einer Weiterbildung ist der Binärwiedergabedatenspeicher 26 mit einer Größe 5 ausgelegt, die eine Speicherung von Binärwiedergabedaten aus den Daten mehrerer sequentiell bearbeiteter Datenträger gestattet. Dadurch sind beispielsweise längere Sequenzen von sich zu einem längeren Musikstück ergänzenden Audiodaten wiederholt ausgebbar oder auf ein anderes Medium beispielsweise durch Infrarotübermittlung übertragbar.

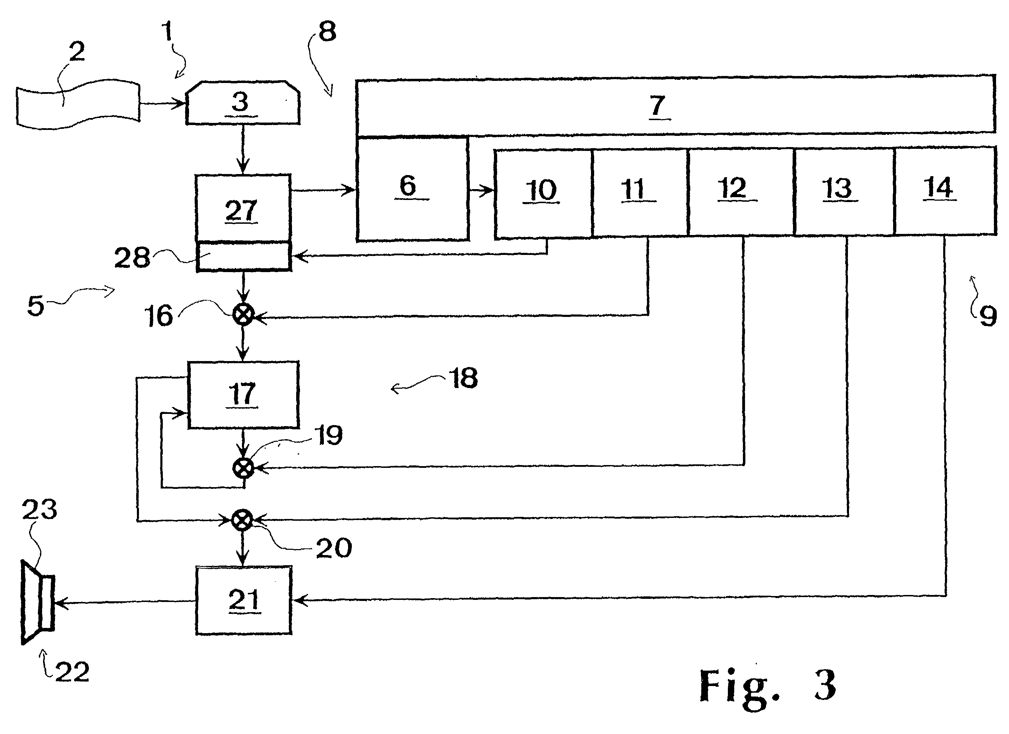

Fig. 3 zeigt in einem Blockschaltbild ein drittes Ausführungsbeispiel einer Vorrichtung zur Ausgabe von auf einem Datenträger digital gespeicherten Daten als Abwandlung des Ausführungsbeispieles gemäß Fig. 1, wobei sich in Fig. 1 und Fig. 3 entsprechende Bauelemente mit gleichen Bezugszeichen versehen und im weiteren nicht näher erläutert sind. Bei der Vorrichtung gemäß Fig. 3 verfügt die Datenwandlereinheit 5 über einen dem Detektionsglied 3 nachgeschalteten schnellen Gesamtdaten-Analog/Digital-Wandler (Gesamtdaten-ADW) 27, der zum einen an das Startblockauswerteglied 6 angeschlossen und dem zum anderen ein Schwellwertrekonstruktionsglied 28 als Datenrekonstruktionselement nachgeschaltet ist. Zweckmäßigerweise ist der Gesamtdaten-ADW 27 als schneller 8-Bit-Analog/Digital-Wandler ausgeführt. Bei dem Ausführungsbeispiel gemäß Fig. 3 ist vorgesehen, den Kontrast und die Festlegung des Schwellwertes flexibel durch eine Filterfunktion in einer Wertetabelle festzulegen. Dadurch ist eine Kontrastoptimierung und Verringerung von Einlesefehlern erzielt. Das Ausführungsbeispiel gemäß Fig. 3 zeichnet sich bei hoher Flexibilität hinsichtlich der Datenrekonstruktion in kostengünstiger Weise durch eine sehr geringe Anzahl von Bauelementen der Datenwandlereinheit 5 aus.

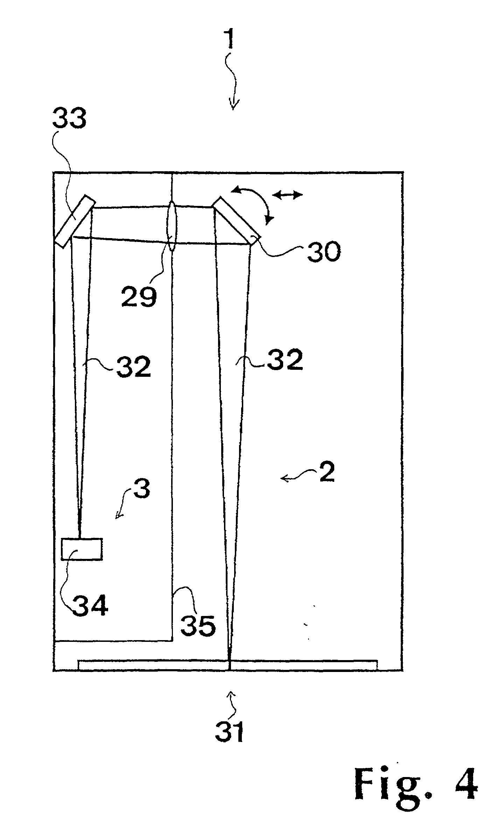

Fig. 4 zeigt eine zweckmäßige Ausgestaltung einer optisch arbeitenden Leseeinheit 1 für eine Vorrichtung zur Ausgabe von auf einem ruhenden Datenträger digital optisch gespeicherten Daten gemäß Fig. 1, Fig. 2 oder Fig. 3, die jedoch grundsätzlich auch in Verbindung mit anderen Datenausgabevorrichtungen eingesetzt werden kann. Die Leseeinheit 1 gemäß Fig. 4 verfügt über eine in Fig. 4 nicht dargestellte Beleuchtungseinrichtung, mit der ein ruhender Datenträger mit optisch auslesbaren, in einem Hell-Dunkel-Punktraster digital gespeicherten Daten mit Beleuchtungsstrahlung beaufschlagbar ist. Das Abtastglied 2 der Leseeinheit 1 gemäß Fig. 4 weist eine Ausleseoptik 29 auf, die über einen schwenkbaren und verschiebbaren Ausrichtspiegel 30 mit aus einem Fokalbereich 31 rückgeworfener Auslesestrahlung 32 beaufschlagbar ist. Mit der Ausleseoptik 29 ist die Auslesestrahlung 32 über einen Festspiegel 33 auf das Detektionsglied 3 fokussierbar. Bei bevorzugt zeilenweiser paralleler oder sequentieller Abtastung des Datenträgers ist das Detektionsglied 3 als Zeilendetektor 34, vorzugsweise als sogenannter Charge-Coupled-Device- (CCD-) Detektor ausgeführt. Zum Abschirmen von Streustrahlung ist die Auslesestrahlung 32 nach der Ausleseoptik 29 innerhalb eines lichtdichten Gehäuses 35 geführt.

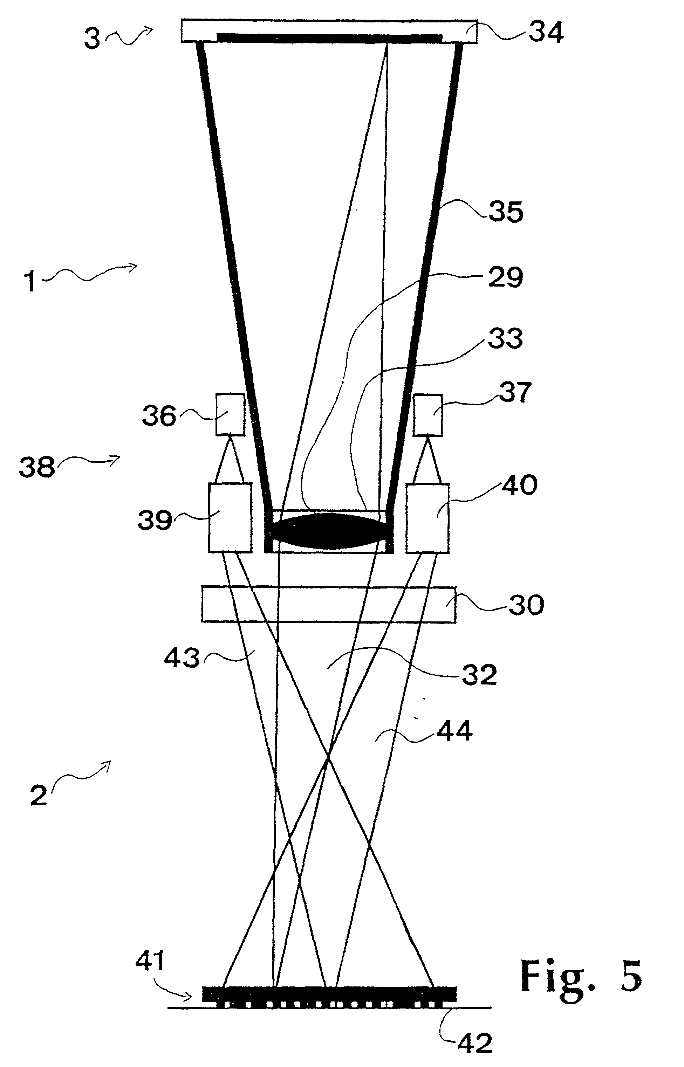

Fig. 5 zeigt die Leseeinheit 1 gemäß Fig. 4 in einer Seitenansicht mit zur übersichtlicheren Darstellung einem um 180 Grad abgewinkelten Strahlengang zwischen dem Festspiegel 33 und dem Zeilendetektor 34. Beidseitig der Ausleseoptik 29 sind Lichtquellen 36, 37 einer Beleuchtungseinrichtung 38 vorgesehen, mit deren jeweiligem Ausgangslicht eine zugeordnete Beleuchtungsoptik 39, 40 beaufschlagbar ist. Als Lichtquellen 36, 37 werden bevorzugt Diodenlaser verwendet. Mit den Beleuchtungsoptiken 39, 40 ist ein in der Darstellung gemäß Fig. 5 auf einem Fenster 41 aufgelegter Datenträger 42 mit einem rechteckförmigen, die Daten enthaltenden Hell-Dunkel-Raster zeilenweise in Querrichtung mit zwei an der Oberfläche des Datenträgers 42 aneinandergrenzenden Beleuchtungsstrahlen 43, 44 beleuchtbar.
Bei der Leseeinheit 1 gemäß Fig. 4 und Fig. 5 erfolgt das Auslesen der Daten über die Steuereinheit 7 durch aufeinanderfolgendes zeilenweises Positionieren der Beleuchtungsstrahlen 43, 44 mit zeilenweisem Schwenken des Ausrichtspiegels 30 und Auslesen des Zeilendetektors 34.

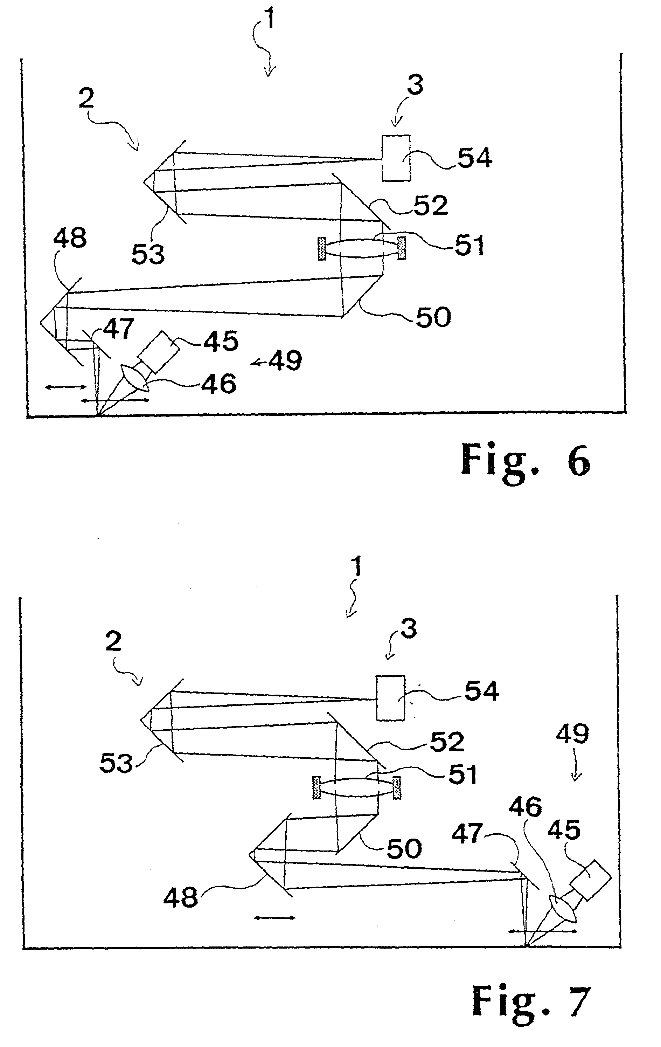

Fig. 6 und Fig. 7 zeigen ein weiteres Ausführungsbeispiel einer optisch arbeitenden Leseeinheit 1 zur Verwendung mit einer Vorrichtung gemäß Fig. 1, Fig. 2 oder Fig. 3 oder auch mit einer anderen Datenauslesevorrichtung zum Auslesen eines nicht dargestellten Datenträgers. Die Leseeinheit 1 gemäß Fig. 6 und Fig. 7 weist eine beispielsweise als lichtemittierende Diode als Leuchtdiode (LED) ausgeführte Lichtquelle 45 auf, mit deren Ausgangsstrahlung eine Linienfokussieroptik 46 beaufschlagbar ist. Mit der Linienfokussieroptik 46 ist ein beispielsweise mit einem rechteckförmig begrenzten Hell-Dunkel-Raster zur digitalen Speicherung von Daten ausgestatteter Datenträger in quer verlaufenden Zeilen beleuchtbar.

Weiterhin verfügt das Abtastglied 2 der Leseeinheit 1 gemäß Fig. 6 und Fig. 7 über einen in räumlich fester Relation zu der Lichtquelle 45 und der Linienfokussieroptik 46 stehenden, um 90 Grad ablenkenden Verschiebespiegel 47, mit dem von der Oberfläche des Datenträgers rückgeworfene Strahlungsanteile auf eine um 180 Grad unter Parallelversatz umlenkende Verschiebeumlenkeinheit 48 aus beispielsweise einem Prisma oder Spiegeln lenkbar ist. Die Verschiebeumlenkeinheit 48 ist beispielsweise über eine Seilzuganordnung oder eine Stangenmechanik mit dem aus der Lichtquelle 45, der Linienfokussieroptik 46 und dem Verschiebe-Spiegel 47 gebildeten Verschiebeteil 49 derart gekoppelt, daß der Verschiebeweg der Verschiebeumlenkeinheit 48 der Hälfte des Verschiebeweges des Verschiebeteiles 49 entspricht.

Die mit der Verschiebeumlenkeinheit 48 umlenkbaren Strahlungsanteile beaufschlagen einen um 90 Grad ablenkenden ersten Festablenkspiegel 50, durchtreten eine Ausleseoptik 51 und sind über einen um 90 Grad ablenkenden zweiten Festablenkspiegel 52 sowie eine um 180 Grad umlenkende Festumlenkeinheit 53 aus beispielsweise einem Prisma oder Spiegeln zur Strahlfaltung aus räumlichen Gründen auf einen Zeilendetektor 54 des Detektionsgliedes 3 lenkbar, wobei der erste Festablenkspiegel 50, die Ausleseoptik 51, der zweite Festablenkspiegel 52 sowie die Festumlenkeinheit 53 räumlich fest zueinander angeordnet sind. Dabei ist gewährleistet, daß ein durch die Ausleseoptik 51 auf den Zeilendetektor 54 abgebildeter Fokalbereich bei Auslesen des Datenträgers räumlich fest angeordnet bleibt, da aufgrund der Verschiebung der Verschiebeumlenkeinheit 48 um den halben Weg des Verschiebeteiles 49 die gesamte optische Weglänge bei Verschiebung zwischen einer ersten Randstellung gemäß Fig. 6 und einer zweiten Randstellung gemäß Fig. 7 die optische Weglänge zwischen einem Datenträger und dem Zeilendetektor 54 unverändert bleibt.

Die in Fig. 6 und Fig. 7 dargestellte Leseeinheit 1 zeichnet sich durch eine sehr gute Raumausnutzung und damit kleine Bauweise aus. Weiterhin ist aufgrund der Verschiebung der Lichtquelle 45 und der Linienfokussieroptik 46 über den gesamten Datenträger dessen in Verschieberichtung gleichförmige Ausleuchtung gewährleistet, die die Datenverarbeitung vereinfacht.

## Patentansprüche

1. Vorrichtung zur Ausgabe von auf einem Datenträger digital in Form eines zweidimensionalen Rasters gespeicherten Daten, mit einer Leseeinheit (1) zum Auslesen der Daten von dem Datenträger als Analogsignale, mit einer Datenwandlereinheit (5) zum Aufarbeiten der Daten und einer Ausgabeeinheit (22) zur Ausgabe der aufgearbeiteten Daten, **gekennzeichnet durch** die folgenden Merkmale
a) die Leseeinheit (1) weist einen die digitalen Daten zeilenweise nacheinander erfassenden Zeilendetektor (34) auf;
b) die digitalen Ausgangsdaten aus der Datenwandlereinheit (5) werden an eine Startblockerfassungseinheit (8) übertragen;
c) mit der Startblockerfassungseinheit (8) ist eine Steuerdatenspeicherheit (9) verbunden;
d) die Datenwandlereinheit (5) weist ferner einen Wiedergabedaten-Analog/Digital-Wandler (WADW) (15) auf, weicher mit einem Graustufen-schwellwertgeber (10) der Steuerdatenspeichereinheit (9) zusammengeschlossen ist;
e) mit dem WADW (15) ist ein Drehkorrekturglied (16) verbunden, das seinerseits an einen Drehkorrekturwertgeber (11) der Steuerdatenspeichereinheit (9) angeschlossen ist;
f) dem Drehkorrekturglied (16) ist ein Speicherglied (18) der Drehwandlereinheit (5) nachgeschaltet, das einen Mehrfachspeicher (17) sowie ein Texturrekonstruktionsglied (19) aufweist, welches mit einem Rastermaßgeber (12) der Steuerdatenspeichereinheit (9) zusammenwirkt;
g) die bezüglich des Rastermaßes im Speicherglied (18) komprimierten Binärdaten sind auf ein Datenaufarbeitungsglied (20) aufgebbar, das an einen Datenformatgeber (13) der Steuerdatenspeichereinheit (9) angeschlossen ist.

2. Vorrichtung nach Anspruch 1, **dadurch gekennzeichnet, daß** zur akustischen Ausgabe die Daten aus dem Datenaufarbeitungsglied (20) an einen Ausgabe-Digital/Analog-Wandler (ADAW) (21) übertragbar sind, der mit einem Aussteuerwertegeber (14) der Steuerdatenspeichereinheit (9) verbunden ist.

3. Vorrichtung nach Anspruch 1 oder 2, **dadurch gekennzeichnet, daß** zwischen dem Texturrekonstruktionsglied (19) und dem Datenaufarbeitungsglied (20) ein Binärwiedergabedatenspeicher (26) angeordnet ist, der den vollen wiederzugebenden Informationsgehalt der Binärwiedergabedaten aus dem Drehkorrekturglied (16) aufzunehmen in der Lage ist.

4. Vorrichtung nach Anspruch 3, **dadurch gekennzeichnet, daß** zwischen dem Drehkorrekturglied (16) und dem Texturrekonstruktionsglied (19) ein Binärvollbildspeicher (25) angeordnet ist.

5. Vorrichtung nach einem oder mehreren der Ansprüche 1 bis 4, **dadurch gekennzeichnet, daß** die Leseeinheit (1) eine Ausleseoptik aufweist, die über einen schwenkbaren und verschiebbaren Ausrichtspiegel mit aus einem Fokalbereich (31) rückgeworfener Ausiesestrahlung (32) beaufschlagbar ist.

6. Vorrichtung nach Anspruch 5, **dadurch gekennzeichnet, daß** die Auslesestrahlung (32) über einen Festspiegel (33) auf einen Zeilendetektor (34) fokussierbar ist.

## Claims

1. Output apparatus for data digitally stored in the form of a two-dimensional grid on a data carrier, comprising a reading unit (1) for reading the data from the data carrier as analogue signals, further comprising a data converter unit (5) for data processing and an output unit (22) for the output of processed data, **characterised by** the following features
a) the reading unit (1) comprises a line detector (34), which successively enters the digital data line by line;
b) the digital output data from the data converter unit (5) are transferred to a start block capturing unit (8);
c) a control data storage unit (9) is connected to the start block capturing unit (8);
d) the data converter unit (5) further comprises a play-back data analogue/digital converter (WADW) (15), combined with a grey stage threshold signalling device (10) of the control data storage unit (9);
e) a twist correction member (16) is connected to the WADW (15), which in turn is connected to a twist correction signalling device (11) of the control data storage unit (9);
f) a storage member (18) of the twist converter unit (5) is connected to the output side of the twist correction member (16), and comprises a multiple storage means (17) as well as a texture reconstruction member (19), which coacts with a grid dimension signal emitter (12) of the control data storage unit (9);
g) the binary data which are compressed in the storage member (18) in relation to the grid size are adapted to be entered into a data processing member (20), which is connected to a data formatting device (13) of the control data storage unit (9).

2. Apparatus according to claim 1, **characterised in that** for acoustic reproduction the data from the data processing member (20) are adapted to be transferred to an output digital/analogue converter (ADAW) (21), which is connected to a level control value signalling means (14) of the control data storage unit (9).

3. Apparatus according to claim 1 or 2, **characterised in that** between the texture reconstruction member (19) and the data processing member (20) a binary reproduction data storage means (26) is provided, which is capable of storing the complete information content to be reproduced of the binary reproduction data derived from the twist correction member (16).

4. Apparatus according to claim 3, **characterised in that** between the twist correction member (16) and the texture reconstruction member (19) a binary full image storage device (25) is provided.

5. Apparatus according to any one or more of claims 1 to 4, **characterised in that** the reading unit (1) comprises reading optics, which by way of a pivotal and slidable aligning mirror is adapted to be subjected to the reflected display radiation (32) reflected form a focusing region (31).

6. Apparatus according to claim 5, **characterised in that** the display radiation (32) is adapted to be focused by way of a stationary mirror (33) onto a line detector (34).

## Revendications

1. Dispositif de sortie de données mémorisées de manière numérique sous forme d'une trame bidimensionnelle sur un support de données, comprenant une unité de lecture (1) pour extraire les données du support de données sous forme de signaux analogiques, une unité de conversion des données (5) pour le retraitement des données et une unité de sortie (22) pour la sortie des données retraitées, **caractérisée en ce que**
a) l'unité de lecture (1) présente un détecteur de lignes (34) pour la saisie successive des données numériques ligne par ligne,
b) les données numériques de sortie sont transmises à l'unité de saisie du bloc initial (8) au départ de l'unité de conversion des données (5),
c) un bloc de mémoire des données de commande (9) est connecté à l'unité de saisie du bloc initial (8),
d) l'unité de conversion des données (5) présente, par ailleurs, un convertisseur analogique-numérique (WADW) (15) des données à reproduire connecté à un transmetteur de valeurs seuils de niveaux de gris (10) du bloc de mémoire des données de commande (9),
e) un organe de correction de transposition (16) lui-même connecté à un transmetteur de valeurs de correction de transposition (11) du bloc de mémoire des données de commande (9) est raccordé au convertisseur analogique-numérique (WADW) (15),
f) à la suite de l'organe de correction de transposition (16) est intercalé un organe de mémoire (18) de l'unité de conversion des données (5), présentant une mémoire multiple (17) ainsi qu'un organe de reconstruction de texture (19) agissant conjointement avec un transmetteur de dimension de trame (12) du bloc de mémoire des données de commande (9),
g) les données binaires, comprimées dans l'organe de mémoire (18) eu égard à la dimension de trame, peuvent être extraites vers un organe de retraitement des données (20) connecté à un transmetteur de format de données (13) du bloc de mémoire des données de commande (9).

2. Dispositif selon la revendication 1, **caractérisé en ce que** les données, aux fins de leur sortie acoustique, peuvent être transmises au départ de l'organe de retraitement des données (20) à un convertisseur numérique-analogique de sortie (ADAW) (21) connecté à un transmetteur de valeurs de modulation (14) du bloc de mémoire des données de commande (9).

3. Dispositif selon la revendication 1 ou 2, **caractérisé en ce qu'**entre l'organe de reconstruction de texture (19) et l'organe de retraitement des données (20) est intercalée une mémoire de données binaires à reproduire (26), capable de recevoir, au départ de l'organe de correction de transposition (16), le contenu complet de l'information à reproduire, véhiculé par les données binaires à reproduire.

4. Dispositif selon la revendication 3, **caractérisé en ce qu'**entre l'organe de correction de transposition (16) et l'organe de reconstruction de texture (19) est intercalée une mémoire d'image binaire (25).

5. Dispositif selon une ou plusieurs des revendications 1 à 4, **caractérisé en ce que** l'unité de lecture (1) présente un dispositif optique d'extraction pouvant être frappé par un rayonnement d'extraction (32) réfléchi au départ d'une zone focale (31) par l'intermédiaire d'un miroir d'orientation pouvant pivoter et être décalé.

6. Dispositif selon la revendication 5, **caractérisé en ce que** le rayonnement d'extraction (32) peut être focalisé sur un détecteur de lignes (34) par l'intermédiaire d'un miroir stationnaire (33).
